**Europäisches Patentamt**

(19) **European Patent Office**

**Office européen des brevets**

(11) Publication number: **0 126 018**

**A1**

(12) # EUROPEAN PATENT APPLICATION

(21) Application number: **84630060.6**

(22) Date of filing: **13.04.84**

(51) Int. Cl.³: **G 03 B 21/10**

(30) Priority: **14.04.83 AU 8886/83**
**18.04.83 AU 8938/83**

(43) Date of publication of application:
**21.11.84 Bulletin 84/47**

(84) Designated Contracting States:
**AT BE CH DE FR GB IT LI LU NL SE**

(71) Applicant: **SOUTHERN CROSS PROMOTIONS (VIC.) PTY. LTD.**
**Factory 5 2 Brooklyn Avenue**
**Dandenong Victoria 3175(AU)**

(72) Inventor: **Hall, Graeme John**
**Factory 5 2 Brooklyn Avenue**
**Dandenong Victoria(AU)**

(72) Inventor: **Williams, Maurice**
**Factory 5 2 Brooklyn Avenue**
**Dandenong Victoria(AU)**

(74) Representative: **Waxweiler, Jean et al,**
**OFFICE DENNEMEYER S.à.r.l. 21-25 Allée Scheffer**
**P.O.Box 41**
**L-2010 Luxembourg(LU)**

(54) **Projection cabinet.**

(57) A self-contained projection cabinet (10) for displaying images projected by a projector (46) located within said cabinet onto a screen (40), has a generally cuboidal shape with an inwardly-sloping top rear wall portion (34). The projector (46) is located in a drawer (44) located near the base (16) of the cabinet (10), which drawer (44) may be withdrawn so that access may be gained to the projector (46), and which drawer (44) when closed locates the projector accurately such that the centre line of the projection is established relative to the first of three mirrors used to transmit the image to the screen (40). The first mirror (54) is located vertically with respect to the generally horizontally disposed base (16) of the cabinet and reflects the image to a second mirror (56) which is disposed at an angle to the base (16), but generally parallel to the front wall, (18, 28) in part of which the screen (40) is located. A third mirror (58) is located on the internal surface of the angled rear wall (34), and is parallel to the second mirror (56). The volume in which the mirror and the light path are contained is sealed from the projector enclosure and from the outside to minimize contamination of the mirror surfaces.

_FIG. 1_

This invention relates to a projection cabinet of the self-contained type, wherein images of transparencies are projected onto a screen to provide a visual display.

It is known to provide self-contained projection cabinets which incorporate a projector such as a slide projector for transmitting images within the cabinet and displaying the images on the rear of a viewing screen which is viewed from outside the cabinet. Such projection cabinets are commonly used in audio-visual displays and advertising purposes.

It has been a disadvantage of the projection cabinets available to date that in order to obtain a large viewing screen, it is necessary to provide a cabinet of considerable size and bulk. In particular such cabinets have a large front to back dimension in order to provide a light path within the cabinet of sufficient length to give the required viewing area on the projection screen. Because these cabinets are bulky they are difficult to transport and frequently difficult to arrange in the required viewing area. If the cabinets are kept small enough for ready transportation or compact positioning then the size of the viewing screen is restricted below that which is desirable.

It is an object of this invention to provide a self-contained projection cabinet which will provide a maximum image area on the screen, while allowing for a minimum front-to-back cabinet dimension.

The invention provides a self-contained projection cabinet (10) for displaying images from a projector (46) located within said cabinet (10) onto a screen (40), said cabinet (10) having a base (16) normally horizontally disposed, front and rear wall elements (18,28;20,34,36), side wall elements (22,30;24,32) and a top (26), projector locating means (44) on or near said base (16), said means (44) arranged to locate said projector (46) to project an image, such that the centre line of said projected image is substantially horizontal, onto a substantially vertical first planar reflecting surface (54) positioned between said base (16) and a rear wall element (20) and angled to reflect the transmitted image toward a second planar reflecting surface (56) incorporating a horizontal axis parallel to the edge between said base (16) and a front wall element (18), said second reflecting surface (56) being angled between said base (16) and said front wall element (18) to reflect the image onto a third planar reflecting surface (58) parallel to said second planar reflecting surface (56) so as to reflect the image forwardly onto the rear face of said screen (40), which forms part of a front wall element (28).

An embodiment of the invention will now be described with reference to the drawings, wherein:

Figure 1 is a front elevation of a projection cabinet according to the invention, with the front panel removed showing the projector and two reflective surfaces;

Figure 2 is a vertical cross-section on the line II-II of Figure 1;

Figure 3 is a horizontal cross-section on the line III-III of Figure 1; and

Figure 4 is a diagrammatic perspective view of the projection cabinet, showing some of the interior components.

The projection cabinet 10 consists of an upper portion 12 and a lower portion 14. The lower portion 14 is of cuboidal shape, and has a base 16 normally horizontally disposed, front wall 18, rear wall 20, and side walls 22,24.

Upper portion 12 is of truncated cuboidal shape, and has a top wall 26, front wall 28, side walls 30,32, and a rear wall consisting of an angled portion 34 and a portion 36 parallel to the front wall 28.

Upper and lower portions 12,14 are connected by members 38.

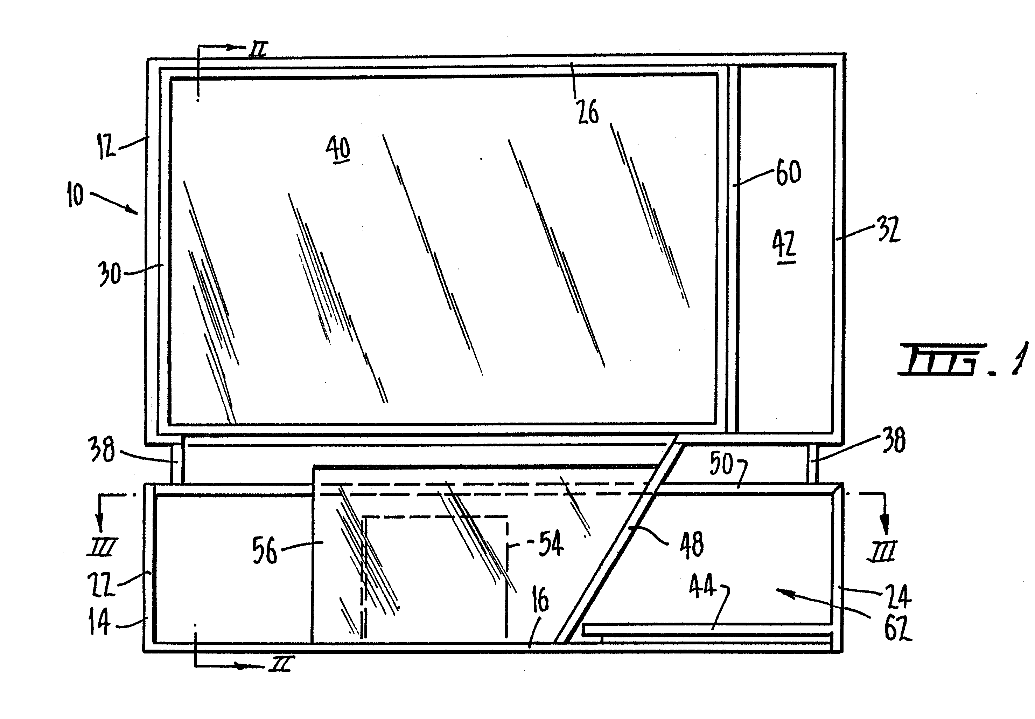

The front wall 28 of the upper portion 12 of the cabinet is provided with a viewing screen 40 which occupies most of the width of cabinet 10 and which is located in the upper portion 12 of the cabinet 10. The viewing screen is of the type normally viewed from the exterior of the cabinet to view an image projected onto the screen from the interior of the cabinet. A panel 42 is located to the right of screen 40 as viewed in Figure 1, which panel and the volume behind it, defined between baffle 60 and side wall 32, may be used to house sound reproducing apparatus or other desirable components.

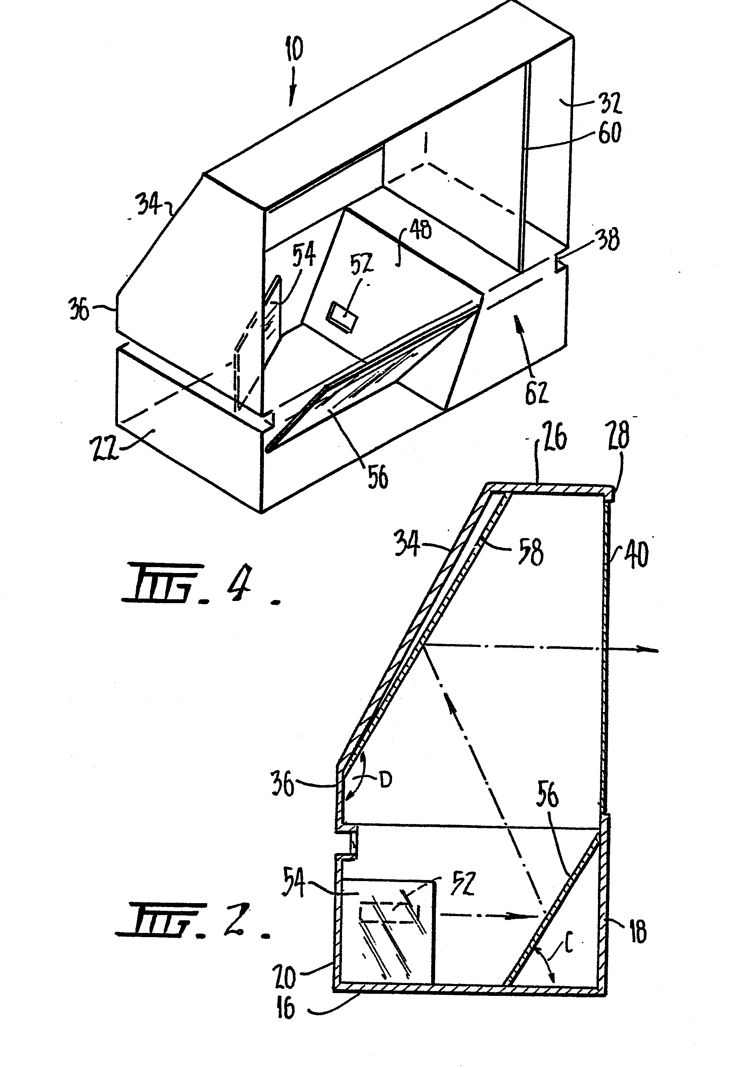

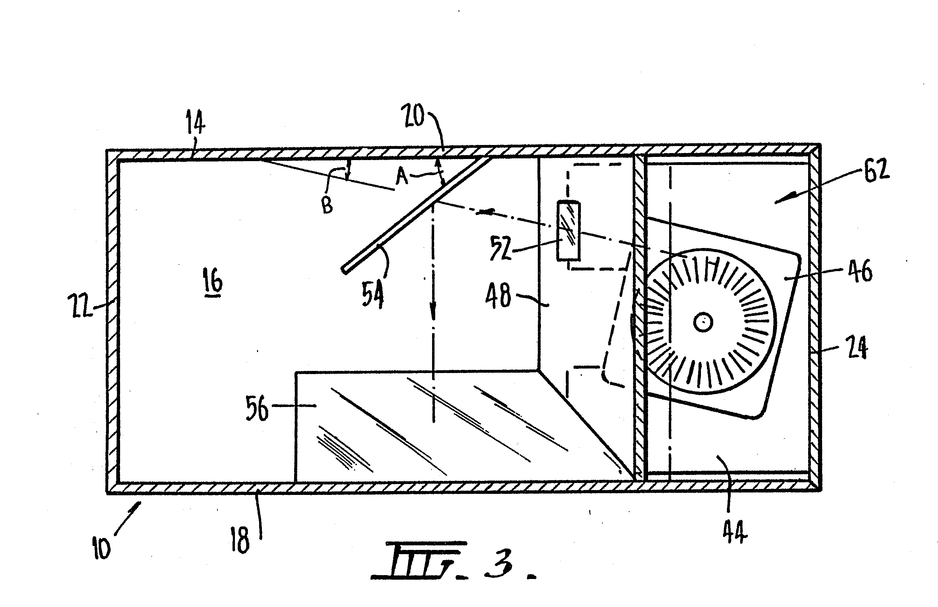

Projector locating means, in the form of a drawer base 44 are provided in the lower portion 14 of cabinet 10 and are adapted to mount a typical slide projector 46,   which may be the 'carousel' type illustrated, so that the image from the projector is projected along the base of the cabinet from right to left as viewed in Figures 1 and 3.  The drawer base 44 may typically be provided with a conventional drawer front forming part of the right hand side of the lower portion 14 and is mounted in a sliding arrangement so that the entire drawer base and projector may be removed from the cabinet for servicing or loading of the projector 46.

The projector 46 is accurately located on drawer base 44, and drawer base 44 is adapted for accurate location within the cabinet 10, by which means accurate positioning of the projector 46 within the cabinet 10 is possible when the drawer is closed.  The projector 46 is then located within an enclosure 62 formed from a transverse wall 48, inclined at an angle of $60^O$ to base 16, and a top wall 50.  These walls extend across the entire depth of the cabinet and thus the enclosure 62 is sealed from the remainder of the cabinet as will be described hereinafter.  The inclined front wall 48 is provided with a window 52 preferably of clear acrylic perspex, so that an image from the projector may be transmitted through the window into the remainder of the cabinet.

The image transmitted by the projector is reflected from three planar reflecting surfaces, for example mirrors, located within the sealed interior of cabinet 10 to transmit the image in the required form from the projector 46 to the viewing screen 40.

The first mirror 54 is vertically located within the cabinet and positioned between the base 16 and the rear wall 20 as shown in Figure 3.  The mirror 54 is preferably at an angle A to the rear wall 20 of $36^O$.  The centre line of projection of the projector 46 is inclined to the rear wall 20 at an angle B of $15^O$, so that the image transmitted by the projector is reflected from the first mirror 54 across the cabinet toward the front wall 18.

The cabinet 10 is further provided with a second, slightly larger four-sided mirror 56 located between base 16 and front wall 18 of lower cabinet portion 10. The plane of the mirror 56 is preferably at an angle C (Figure 2) of 60$^O$ to the plane of base 16. The mirror 56 has parallel top and bottom edges which are parallel to front wall 18.

A third, even larger, mirror 58 is located on the internal surface of upper portion rear wall portion 34. Mirror 58 is parallel to mirror 56, and this is at an angle D of 120$^O$ to rear wall portion 36.

The three mirrors 54,56,58 are positioned such that an image projected from the projector 46 is reflected by first mirror 54 onto second mirror 56, and thence onto third mirror 58 and finally onto the rear surface of the viewing screen 40 so as to present the final image on the viewing screen 40 in an undistorted format. To this end the second and third mirrors 56,58 are positioned as shown in Figure 2 to avoid any "Keystone effect" and the first mirror 54 is carefully laterally positioned within the cabinet so as to centralize the image on the viewing screen 40. It has been found that the positioning of the mirrors and of the projector 46 is important and that variations of one or two minutes of angle or one or two mm from the positions shown, may result in distortions and an unacceptable image on the viewing screen 40.

By the positioning of the mirrors as shown and described, it has been found possible to project an image onto a screen approximately 913mm by 611mm from a 35mm transparency in a projector with a 60mm focal length lens in a cabinet which is not significantly longer than the width of the projection screen, and which most importantly has a front-to-back dimension of only 550mm with the other dimensions being 1155mm (width) and 987mm (height). In the cabinet of the preferred embodiment, the first mirror is preferably 300mm x 225mm, the second mirror is preferably 415mm x 335mm x 571mm x 374mm, and the third mirror is 940 x 635mm. The invention as described can of course be used in various sizes of cabinets by scaling the dimensions up or down and with various projectors incorporating lenses having focal lengths between 58 and 65mm.

It is an important feature of the invention that because the projector is located within an enclosure 62 formed by the lower right hand portions of the cabinet and the enclosure walls 48 and 50, the remainder of the cabinet is able to be sealed at manufacture. In this manner, the reflective surfaces are all located within a sealed environment which may be kept perfectly clean, and there is accordingly no risk of contamination of the mirrors, or of the projected image being degraded by dust or dirt on the reflective surfaces. The interior surfaces are preferably painted matt black.

The projector enclosure 62 is sufficiently large enough to incorporate additional equipment such as a time clock, audio tape deck, or slide selector.

All servicing of this equipment can be done by removing the drawer base 44 which can then be returned to its position within the cabinet accurately aligning the projection axis of the projector with the mirrors as required.

Enclosure 62 will in practice be ventilated, preferably by a vent in base 16 which located under the cut-out portion of drawer 44. A further vent may be located in side wall 24, to provide communication between enclosure 62 and the atmosphere.

Similar apertures for electrical power cords or for other electrical connections may be provided for the equipment in enclosure 62, and for any equipment in the enclosure between baffle 60 and side wall 32.

0126018

CLAIMS:

1. A self-contained projection cabinet (10) for displaying images from a projector (46) located within said cabinet (10) onto a screen (40), said cabinet (10) having a base (16) normally horizontally disposed, front and rear wall elements (18,28;20,34,36), side wall elements (22,30;24,32) and a top (26), projector locating means (44) on or near said base (16), said means (44) arranged to locate said projector (46) to project an image, such that the centre line of said projected image is substantially horizontal, onto a substantially vertical first planar reflecting surface (54) positioned between said base (16) and a rear wall element (20) and angled to reflect the transmitted image toward a second planar reflecting surface (56) incorporating a horizontal axis parallel to the edge between said base (16) and a front wall element (18), said second reflecting surface (56) being angled, between said base (16) and said front wall element (18) to reflect the image onto a third planar reflecting surface (58) parallel to said second planar reflecting surface (56) so as to reflect the image forwardly onto the rear face of said screen (40), which forms part of a front wall element (28).

2. A self-contained projection cabinet (10) according to claim 1, wherein said projector (46) is located within an enclosure (62)within said cabinet (10), which enclosure (62) is sealed from the remainder of the cabinet and provided with a window (52) in one wall (48) of the enclosure (62) arranged so that the projected image from said projector (46) can be transmitted through the window to said first reflecting surface (54).

3. A self-contained projection cabinet (10) according to claim 1 or 2, wherein the interior volume of the cabinet, in which volume said mirrors are located, is sealed in an air-tight manner.

4. A self-contained projection cabinet (10) according to any preceding claim, wherein said projector locating means (44) includes a drawer base (44) on which said projector (46) is mounted, such that the drawer base (44) and projector (46) are capable of being withdrawn from the cabinet (10) for loading or servicing of the projector (46), and wherein said drawer base (44) acts to accurately locate the projector (46) within the cabinet when said drawer base (44) is located in a closed position.

5. A self-contained projection cabinet (10) according to any preceding claim, wherein said screen (40) extends across most of the width of said front wall element (28), the remainder of the width of said front wall element (28), to the depth of said screen (40) being usable for apparatus of an audio-visual or associated nature.

6. A self-contained projection cabinet (10) according to any preceding claim, wherein when 35mm slides are used in a projector (46) having a 60mm focal length lens, an image on said screen (40) of 913mm x 611mm is obtained with a front-to-back cabinet dimensions of 550mm.

7. A self-contained projection cabinet (10) including projector locating means (44) in the form of a drawer (44) said means enabling said projector to be located accurately within said cabinet (10) when said drawer (44) is closed, and being accessible for servicing or repair when said drawer is open, said projector (46) and said means (44) being located in an enclosure (62) which is sealed from the remainder of the interior of said cabinet, there being a window (52) located in an angled wall (48) forming part of said seal, said window (52) enabling images to be projected therethrough into said remainder of said interior, the centre line of said image, as transmitted from said projector (46), being at an angle of $15^{O}$ to the rear wall element (20) of said cabinet (10), a first mirror (54) located at an angle of $36^{O}$ to said rear wall element (20), and reflecting said image to a second mirror (56) generally parallel to said rear wall element (20) and to the front wall element (18) of said cabinet, said second mirror (56) being angled at an angle of $60^{O}$ to the generally horizontal base (16) of said cabinet, and reflecting said image onto a third mirror (58) parallel to said second mirror, said third mirror being supported by an angled rear wall portion (34), said third mirror (58) reflector said image onto the interior of a screen (40) forming part of said front wall element (28).

0126018

FIG. 1

10

32

60

34

36

54

52

48

38

22

62

56

_FIG. 4._

26

28

34

58

40

36

D

56

54

52

20

16

18

C

_FIG. 2._

Fig. 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-1 954 787 (J.J. BRIGHT) <br> * Pages 1,2; figures 1-4 * | 1,4,7 | G 03 B 21/10 |
| X | FR-A-2 110 609 (Y. RUELLAN) <br> * Pages 3-7; figure 1 * | 1,5,6 | |
| A | DE-A-2 840 205 (R. BOSCH GmbH) <br> * Pages 10-15; figures 2,3 * | 1,2,5 | |

TECHNICAL FIELDS SEARCHED (Int. Cl. ³)

G 03 B 21/10

The present search report has been drawn up for all claims

| Place of search | Date of completion of the search | Examiner |
|---|---|---|
| THE HAGUE | 30-07-1984 | BOEYKENS J.W. |